Europäisches Patentamt

European Patent Office

Office européen des brevets

(19)

(11) Publication number: **0 449 504 A2**

(12) # EUROPEAN PATENT APPLICATION

(21) Application number: **91302462.6**

(51) Int. Cl.⁵: **H02M 3/335**

(22) Date of filing: **21.03.91**

(30) Priority: **27.03.90 GB 9006839**

(43) Date of publication of application:
**02.10.91 Bulletin 91/40**

(84) Designated Contracting States:
**DE FR IT**

(71) Applicant: **THE PLESSEY COMPANY LIMITED**
**Vicarage Lane**
**Ilford Essex, IG1 4AQ (GB)**

(72) Inventor: **Beddoe, Stanley**
**6 Martin Avenue**
**Stubbington, Fareham, Hampshire (GB)**

(74) Representative: **Waters, Jeffrey et al**
**GEC Patent Department, GEC Marconi**
**Limited, West Hanningfield Road**
**Great Baddow, Chelmsford, Essex CM2 8HN**
**(GB)**

(54) Improvements relating to DC-DC converters.

(57) A switch mode regulated DC-DC converter is provided having a first isolated output providing a regulated DC output and a second output providing feedback control of the converter.

EP 0 449 504 A2

Jouve, 18, rue Saint-Denis, 75001 PARIS

This invention relates to DC-DC converters and relates more specifically to DC-DC converters for providing regulated switch mode DC supplies which afford isolation between the power supplies and the associated load circuits.

The power requirements for present day digital equipment usually require a stabilised low voltage DC output which is isolated from the input supply and also being electromagnetically compatible with modern electrical interference standards. If an additional isolated output is required which is proportional to the input voltage then known converters will require additional circuitry, usually in the form of a post regulator which provides the regulated supply from an unregulated isolated power conversation stage.

Known converters invariably use optical isolators in order to enable electrical feedback to be provided from the isolated windings of the converter to the power conversion stage of control circuits. Such isolators, if used in an analogue configuration, require individual adjustments and can deteriorate during use due to transfer function decay. If used in a digital configuration using a level detector in a system known in the art as "bang-bang mode" then the output ripple is higher and larger smoothing capacitors are needed. The use of a separate winding for feedback control is normally only possible using a low leakage relatively expensive toroid transformer and often requires post regulation.

The present invention is directed to a regulated switch mode DC-DC converter which provides an isolated relatively low voltage regulated DC output and an output proportional to the input voltage to the converter without the need for post regulation and without the need for optical isolators, and which is of relatively simple and cheap construction involving a minimum of components.

Converters according to the present invention are especially, but not exclusively, applicable to circuits of the kind described in our co-pending Patent Application No. 8825438.8 (F20596).

According to the present invention there is provided a regulated switch mode DC-DC converter comprising a logic gate arrangement providing a plurality of NOR logic gates which are connected for providing an oscillator circuit and a regulating driver gate for a power transistor which accordingly conducts intermittently in order to provide from a DC input power supply a regulated current through rectifier means and the primary of an isolating transformer of the converter having two secondary windings, the first of which comprises a power output winding having an output circuit arranged for providing a regulated DC output and an unregulated DC output which is proportional to the input voltage to the converter and which is derived during switch-on cycles of the power transistor, and the second of which comprises a feedback winding for producing a feedback voltage due to energy generated in the isolating transformer as the power transistor switches off, which feedback voltage is maximised by the rectifier means limiting, due to its reverse charge characteristic, the return of such energy to the input and is used to control the power transistor driving gate and thus regulate the switching point of the power transistor and thus the magnitude of the regulated output of the isolating transformer.

In carrying out the present invention three NOR gates may be utilised for the oscillator and a fourth NOR gate which may comprise part of the same volume produced logic device package may serve as the driver gate of the power transistor.

The driver gate may be controlled by the output from the feedback circuit derived through a time delay path, the level of output being dependent upon the voltage level of the DC input power supply connected to the isolating transformer.

The power output secondary winding circuit of the isolating transformer may comprise a pair of diode-rectifiers which act in association with two capacitors to function as a voltage doubler in respect of the unregulated voltage and a half wave rectifier in respect of the regulated voltage output.

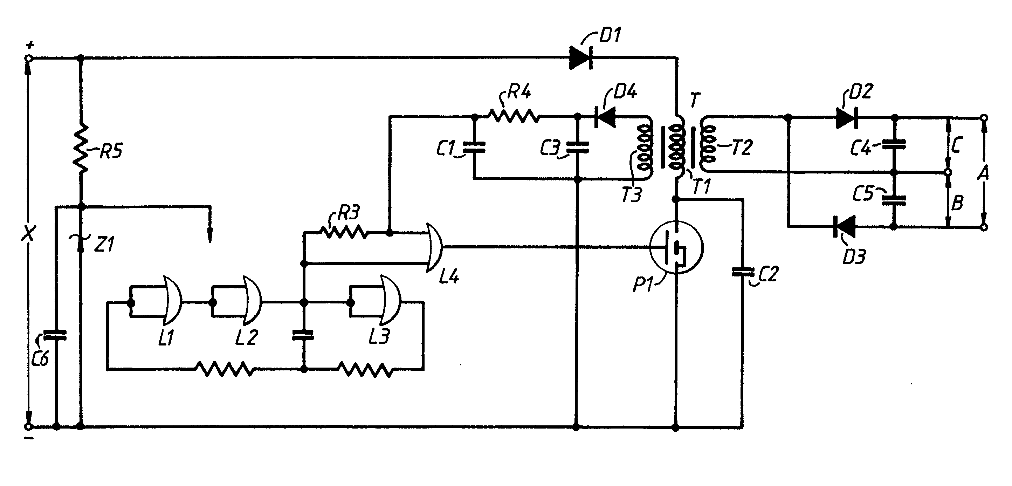

By way of example the present invention will now be described with reference to the accompanying drawing which shows the circuit diagram of an isolated self-regulating DC-DC converter according to the invention.

Referring to the drawing, the converter is connected to a DC input power supply X between the positive and negative inputs of which are serially connected a diode D1, a primary winding T1 of an isolating transformer T and a power transistor or MOSFET P1. A capacitor C2 is connected across the power transistor P1 to provide a by-pass path for the emf produced by the transformer T on switch-off of the power transistor P1, and a resistor R5 and zener diode Z1 are connected in series across the input supply X with a capacitor C6 being connected across the Zener diode Z1.

The converter comprises three NOR gates L1, L2 and L3 which are connected to define a conventional oscillator circuit which operates at about 100 KHz. A further NOR gate L4 which may, together with the gates L1, L2 and L3 form part of a standard volume-produced relatively low-cost logic circuit device package, is connected for driving the gate of the power transistor P1 and is coupled to the oscillator L1, L2 and L3 by a time-delay circuit consisting of resistor R3 and capacitor C1 and connected in the output circuit of a secondary winding T3 of the isolating transformer T. The secondary winding T3 performs a feedback function whereas another secondary winding T2 provides a power output winding.

The output winding circuit including the secondary winding T2 has two diodes D2 and D3 which cooperate with two capacitors C4 and C5 to function as a voltage doubler in respect of a DC output A but which function as a half-wave rectifier in respect of a further DC output B.

The transformer winding T3 is a feedback winding and the output there from is half-wave rectified by a diode D4 and partially smoother by a capacitor C3 before being fed into a resistor R4. The resistor R4 is connected to the previously mentioned capacitor C1 which forms part of the time-delay circuit for the NOR power transistor driver gate L4.

The feedback winding arrangement is such that only the output from the transformer T that results from switching off the power transistor P1 by releasing the stored energy in the inductance of the transformer T is in fact rectified and utilised to provide a regulating feedback control signal for the next cycle of operation of the converter.

The function of the diode D1 is to modify the circuit in respect of back emf in the transformer circuit so that the energy stored in the transformer inductance can develop a relatively high primary voltage by using the capacitor C2 and the reverse charge characteristic of the diode D1.

As the power transistor P1 is switched on and off in response to the output from the oscillator and in dependence upon the regulation provided by the feedback arrangement just above described a resultant regulated output smoothed by capacitor C4 is provided at B in the power output circuit and sustained until the next stored cycle of operation.

The provision by the converter of an output voltage which is proportional to the input voltage of the supply is achieved during the switch-on cycle of the power transistor P1 during which the high voltage is applied to the primary winding T1 of transformer T which in turn induces a proportional voltage in a secondary winding T2. This unregulated proportional voltage after rectification by diode D2 appears at the point C in the output circuit. The voltage at point A in the output circuit of secondary winding T2 is the addition of the regulated voltage at B and the proportional unregulated voltage at C. This feature improves accuracy when feeding a fixed impedance load. Another feature of the arrangement is the use of a "loose" regulating circuit for the NOR gate integrated circuit providing the oscillator and driving gate for the power transistor P1.

Another feature of the DC-DC converter according to the present invention, is the use of a so-called loose regulating circuit for the NOR gate integrated circuit logic chip arrangement comprising the NOR gates L1, L2, L3 and L4 which define the oscillator and the driving gate for the power transistor P1. The series resistor R5 which feeds the voltage regulating Zener diode Z1 is chosen to only limit the higher level of voltages so that at the minimum input levels the inherent mark-to-space ratio of the oscillator provided by the NOR gate L1, L2 and L3 will increase due to the diminishing ratio between the value of logic levels 1 and 0 inherent in the design of the logic circuit chips.

As will be appreciated from the foregoing description of one embodiment of this invention by way of example, it can be seen that the complex functions of the DC-DC converter are achieved with a relatively low number of low-cost components, and thereby provides a very significant saving in cost of the converter whilst providing both regulated and unregulated outputs which are isolated from the input power supply to the converter.

## Claims

1. A regulated switch mode DC-DC converter comprising a logic gate arrangement providing a plurality of NOR logic gates which are connected for providing an oscillator circuit and a regulating driver gate for a power transistor which accordingly conducts intermittently in order to provide from a DC input power supply a regulated current through rectifier means and the primary of an isolating transformer of the converter having two secondary windings, the first of which comprises an output winding having an output circuit arranged for providing a regulated DC output and an unregulated DC output which is proportional to the input voltage to the converter and which is derived during switch-on cycles of the power transistor and the second of which comprises a feedback winding for producing a feedback voltage due to energy generated in the isolating transformer as the power transistor switches off, which feedback voltage is maximised by the rectifier means limiting, due to its reverse charge characteristics, the return of such energy to the input and is used to control the power transistor driver gate and thus vary the switching point of the power transistor and thus the magnitude of the regulated output of the isolating transformer.

2. A converter as claimed in claim 1, in which three NOR logic gates are utilised for the oscillator and a fourth NOR logic gate serves as the driver gate of the power transistor.

3. A converter as claimed in claim 1 or claim 2, in which the driver gate is controlled by the output from the feedback circuit derived through a time delay path, the level of output being dependent upon the voltage level of the DC input power supply connected to the isolating transformer.

4. A converter as claimed in any preceding claim, in which the power output secondary winding circuit of the isolating transformer comprises a pair of diode rectifiers which act in association with two capacitors to function as a voltage doubler in respect of the unregulated voltage and a half-wave rectifier in respect of the regulated voltage output.

5. A converter as claimed in any preceding claim, in which the NOR gates comprise part of the same volume produced logic device package.

6. A DC-DC converter substantially as hereinbefore described with reference to the accompanying drawing.